**Europäisches Patentamt**

**European Patent Office**

**Office européen des brevets**

(11) Veröffentlichungsnummer : **0 475 133 B1**

(12) **EUROPÄISCHE PATENTSCHRIFT**

(45) Veröffentlichungstag der Patentschrift :
**10.08.94 Patentblatt 94/32**

(21) Anmeldenummer : **91113887.3**

(22) Anmeldetag : **20.08.91**

(51) Int. Cl.⁵ : **C08G 18/67,** C08G 18/28,
C08G 18/32, C08G 18/48,
C08G 18/73, C09D 175/16

(54) Acryloylgruppen enthaltende, aliphatische Polyurethane, ein Verfahren zu ihrer Herstellung und ihre Verwendung.

(30) Priorität : **01.09.90 DE 4027743**

(43) Veröffentlichungstag der Anmeldung :
**18.03.92 Patentblatt 92/12**

(45) Bekanntmachung des Hinweises auf die
Patenterteilung :
**10.08.94 Patentblatt 94/32**

(84) Benannte Vertragsstaaten :
**AT BE CH DE ES FR GB IT LI NL SE**

(56) Entgegenhaltungen :
**EP-A- 0 122 611**

(73) Patentinhaber : **BAYER AG
D-51368 Leverkusen (DE)**

(72) Erfinder : **Meixner, Jürgen, Dr.
Josef-Brocker-Dyk 56
W-4150 Krefeld (DE)**
Erfinder : **Fischer, Wolfgang, Dr.
Eschendonk 6
W-4005 Meerbusch 3 (DE)**
Erfinder : **Pedain, Josef, Dr.
Haferkamp 6
W-5000 Köln 80 (DE)**

**Beschreibung**

Die vorliegende Erfindung betrifft bestimmte Acryloylgruppen enthaltende Polyurethane, die durch Strahlenhärtung in vernetzte Produkte überführt werden können, ein Verfahren zu ihrer Herstellung und ihre Verwendung als Bindemittel für Überzugsmassen.

Acryloylgruppen enthaltende Polyurethane, die, wie beispielsweise in der DE-OS 1 644 798, DE-OS 2 115 373 oder DE-OS 2 737 406 beschrieben, als Umsetzungsprodukt von u.a. Polyisocyanaten und Hydroxyalkylacrylaten erhalten werden, sind seit langem bekannt. Sie werden mit Hilfe von energiereichen Strahlen wie UV- oder Elektronenstrahlen gehärtet und dienen zum Beschichten von z.B. Holz oder zur Herstellung von Überzügen zu graphischen Zwecken.

Zur Herstellung der Urethanacrylate können die unterschiedlichsten Polyisocyanate eingesetzt werden. Falls die Herstellung von vergilbungsbeständigen Lackfilmen im Mittelpunkt des Interesses steht, werden zur Herstellung der Urethanacrylate (cyclo)aliphatische Polyisocyanate eingesetzt. Obwohl u.a. in der DE-OS 2 115 373 auch Hexamethylendisisocyanat als geeignetes Ausgangsdiisocyanat erwähnt wird, kann gesagt werden, daß es sich hierbei um eine rein hypothetische Offenbarung handelt, da dieses preiswerte Diisocyanat in der Praxis wegen der Kristallinität der entstehenden Urethanacrylate, die einer Verwendung als Lackbindemittel entgegen steht, bislang nicht eingesetzt werden konnte.

Die der Erfindung zugrundeliegende Aufgabe bestand darin, Acryloylgruppen enthaltende, aliphatische Polyurethane zur Verfügung zu stellen, deren Herstellung Hexamethylendiisocyanat (HDI) als wesentliches Ausgangsdisisocyanat zum Einsatz gelangt, und die dennoch flüssig sind und unter UV-Betrahlung schnell vernetzen.

Die EP-A-0 122 611 befaßt sich mit der Herstellung von Urethanmodifizierten Polyacrylatharzen, die insbesondere zur Herstellung von magnetischen Schichten geeignet sind. Zur Herstellung dieser Polyacrylatharze können Polyisocyanate der unterschiedlichsten Art eingesetzt werden. Gemäß Beispiel 6 ist auch HDI als Ausgangsdiisocyanat geeignet, jedoch unterscheidet sich dieses Beispiel von den nachstehend näher beschriebenen erfindungsgemäßen Polyurethanen durch (i) die Abwesenheit der erfindungswesentlichen Komponente c), (ii) ein deutlich oberhalb 1 : 1 liegendes NCO/OH-Äquivalentverhältnis, (iii) die Verwendung von Hydroxyethyl-methacrylat anstelle eines Hydroxyalkylacrylats und schließlich (iv) durch eine deutlich geringere Konzentration an (Meth)Acryloylgruppen. Die Harze der Vorveröffentlichung können z.B. peroxidisch oder mittels Elektronenstrahlen ausgehärtet werden. Irgendwelche Hinweise, wie die erfindungsgemäße Aufgabe gelöst werden könnte, werden in der Vorveröffentlichung nicht gemacht.

Die vorstehend definierte Aufgabe konnte durch die Bereitstellung der nachstehend näher beschriebenen erfindungsgemäßen Acryloylgruppen enthaltenden, aliphatischen Polyurethane gelöst werden.

Gegenstand der Erfindung sind Acryloylgruppen enthaltende, aliphatische Polyurethane, die durch Umsetzung von

a) 1,0 Mol einer Diisocyanat-Komponente, bestehend zumindest zu 50 NCO-Äquivalent-% aus Hexamethylendiisocyanat, mit

b) 0,5 - 0,85 Mol einer Acryloylgruppen aufweisenden Alkoholkomponente, bestehend aus mindestens einem Acryloylgruppen aufweisenden einwertigen Alkohol des Molekulargewichtsbereichs 116 bis 144,

c) 0,15 - 0,5 Mol mindestens einer Estergruppen aufweisenden Alkoholkomponente, bestehend aus mindestens einem Estergruppen aufweisenden einwertigen Alkohol des Molekulargewichtsbereichs 154 bis 2000 oder einem Gemisch Estergruppen aufweisender Alkohole eines mittleren Molekulargewichts von 154 bis 2000 und einer mittleren Hydroxylfunktionalität von 0,8 bis 1,5 und

d) 0,3 - 0,5 Mol mindestens eines mehrwertigen Alkohols des Molekulatgewichtsbereichs 62 bis 2000, unter Einhaltung eines NCO/OH-Äquivalentverhältnisses, bezogen auf alle Ausgangskomponenten a) bis d), von 0,5:1 bis 1:1 hergestellt worden sind.

Gegenstand der Erfindung ist auch ein Verfahren zur Herstellung von Acryloylgruppen enthaltenden Polyurethanen, dadurch gekennzeichnet, daß man

a) 1,0 Mol einer Diisocyanat-Komponente, bestehend zumindest zu 50 NCO-Äquivalent-% aus Hexamethylendiisocyanat, mit

b) 0,5 - 0,85 Mol einer Acryloylgruppen aufweisenden Alkoholkomponente, bestehend aus mindestens einem Acryloylgruppen aufweisenden einwertigen Alkohol des Molekulargewichtsbereichs 116 bis 144,

c) 0,15 - 0,5 Mol mindestens einer Estergruppen aufweisenden Alkoholkomponente, bestehend aus mindestens einem Estergruppen aufweisenden einwertigen Alkohol des Molekulargewichtsbereichs 176 bis 2000 oder einem Gemisch Estergruppen aufweisender Alkohole eines mittleren Molekulargewichts von 154 bis 2000 und einer mittleren Hydroxylfunktionalität von 0,8 bis 1,5 und

d) 0,3 - 0,5 Mol mindestens eines mehrwertigen Alkohols des Molekulargewichtsbereichs 62 bis 2000, unter Einhaltung eines NCO/OH-Äquivalentverhältnisses, bezogen auf alle Ausgangskomponenten a) bis d), von 0,5:1 bis 1:1 umsetzt.

Gegenstand der Erfindung ist schließlich auch die Verwendung dieser Acryloylgruppen enthaltenden Polyurethane als Bindemittel für Überzugsmassen.

Die erfindungsgemäß einzusetzende Polyisocyanatkomponente a) besteht zu mindestens 50 NCO-Äquivalent-% aus HDI.

Die Polyisocyanatkomponente a) kann bis zu 50 NCO-Äquivalent-% an anderen Polyisocyanaten mit aliphatisch und/oder cycloaliphatisch gebundenen Isocyanatgruppen enthalten. Bei diesen anderen Polyisocyanaten handelt es sich beispielsweise um 1-Isocyanato-3,3,5-trimethyl-5-isocyanatomethyl-cyclohexan (IPDI), Isocynanuratgruppen aufweisende Polyisocyanate auf Basis von IPDI oder HDI oder Urethangruppen aufweisende Polyisocyanate auf Basis von IPDI oder HDI und mehrwertigen Alkoholen wie beispielsweise Trimethylolpropan und/oder Propylenglykol. Vorzugsweise besteht die Polyisocyanatkomponente a) zu mindestens 80 NCO-Äquivalent-%, besonders bevorzugt ausschließlich aus Hexamethylendiisocyanat (HDI).

Bei der Komponente b) handelt es sich um Acryloylgruppen aufweisende einwertige Alkohole bzw. um beliebige Gemische derartiger Alkohole. Hierunter sind durchschnittlich pro Molekül eine freie Hydroxylgruppe aufweisende Ester der Acrylsäure mit zweiwertigen Alkoholen zu verstehen. Die Ester weisen ein Molekulargewicht von 116 bis 144 auf. Beispiele für solche ethylenisch ungesättigte Ester sind Hydroxyethylacrylat, 1-Methyl-2-hydroxyethylacrylat, 2- und 3-Hydroxypropylacrylat, 2-, 3- und 4-Hydroxybutylacrylat.

Bei der Komponente c) handelt es sich um mindestens einen Estergruppen aufweisenden einwertigen Alkohol oder um ein Gemisch von Estergruppen aufweisenden Alkholen einer durchschnittlichen Hydroxylfunktionalität von 0,8 bis 1,5, jeweils des Molekulargewichtsbereichs 154 bis 2000, vorzugsweise 176 bis 1000. Die Komponente c) kann ebenfalls olefinisch ungesättigte Doppelbindungen aufweisen (beispielsweise aufgrund der Verwendung von Acrylsäure als Aufbaukomponente der Esteralkohole), sie kann jedoch auch ausschließlich aus gesättigten Bausteinen aufgebaut sein. Als Komponente c) sind beispielsweise Estergemische mit einer durchschnittlichen Hydroxylfunktionalität von 0,8 bis 1,5 geeignet, die beispielsweise durch Umsetzung von Essigsäure, Essigsäure-Anhydrid, Acrylsäure mit mehrwertigen Alkoholen wie beispielsweise Trimethylolpropan oder Glycerin oder Alkoxylierungsprodukten derartiger mehrwertiger Alkohole, beispielsweise dem Anlagerungsprodukt von 4 Mol Ethylenoxid an 1 Mol Trimethylolpropan unter Einhaltung eines Äquivalentverhältnisses von Carboxylgruppen zu Hydroxylgruppen von 1,5:3 bis 2,2:3, vorzugsweise 2:3 oder unter Verwendung einer äquivalenten Menge eines Säureanhydrids erhalten werden können.

Zu den Polyolen d) gehören mehrwertige Alkohole des Molekulargewichtsbereichs 62 bis 2000, wie insbesondere mindestens dreiwertige Alkohole des Molekulargewichtsbereichs 92 bis 200 wie beispielsweise Glycerin, Trimethylolpropan, Pentaerythrit und/oder Sorbit. Ebenfalls in Betracht kommen Polyetherpolyole, die durch Alkoxylierung von einfachen Alkoholen der beispielhaft genannten Art zugänglich sind, und die Molekurlargewichte von bis zu 2000, vorzugsweise bis zu 1000 aufweisen; ferner Polyesterpolyole des zuletzt genannten Molekulargewichtsbereichs, die durch Umsetzung von mehrwertigen Alkoholen und mehrwertigen Säuren oder Anhydriden mehrwertiger Säuren in an sich bekannter Weise zugänglich sind. Es ist auch möglich, kleinere Mengen an Diolen wie Ethylenglykol, Thiodiglykol oder Hexandiol mitzuverwenden. Die Mitverwendung von Diolen ist jedoch allenfalls in Mengen bis zu 50 Hydroxyläquivalent-% der Komponente d) möglich, da sonst die erfindungswesentliche Bedingung bezüglich der Eigenschaften der Polyurethane nicht erfüllt werden kann.

Die Herstellung der Polyurethane durch Umsetzung der genannten Ausgangskomponenten kann in Substanz oder in gegenüber Isocyanaten inerten Lösungsmitteln, wie beispielsweise Aceton, Ethylacetat, Butylacetat, niedermolekularen Estern der (Meth)Acylsäuren oder Gemischen derartiger Lösungsmittel erfolgen, wobei vorzugsweise Reaktionstemperaturen von 20 bis 100°C, insbesondere 40 bis 80°C eingehalten werden. Die Umsetzung geschieht vorzugsweise in einer Eintopfreaktion unter Zusatz von geeigneten Katalysatoren, wobei die genannten Reaktionstemperaturen solange aufrechterhalten werden, bis keine freien Isocyanatgruppen mehr vorliegen. Es kann dabei z.B. so vorgegangen werden, daß die Polyisocyanatkomponente a) vorgelegt wird, und die Komponenten b) und c) zusammen oder nacheinander (wobei die Reihenfolge unwesentlich ist) zugegeben werden und dann die Komponente d) zugegeben wird, oder aber so, daß die Komponenten b), c) und d) vorgelegt werden, und die Polyisocyanatkomponente a) zugegeben wird.

In jedem Fall wird die Umsetzung, bei der ein NCO/OH-Äquivalentverhältnis von 0,5:1 bis 1:1 vorliegt, unter milden Bedingungen, z.B. innerhalb der oben genannten Temperaturbereiche solange durchführt, bis der NCO-Gehalt auf unter 0,1 Gew.-% abgefallen ist.

Die zum Polyurethan führende Additionsreaktion kann in an sich bekannter Weise mittels geeigneter Katalysatoren, wie beispielsweise Zinnoctoat, Dibutylzinndilaurat oder tertiären Aminen wie Dimethylbenzylamin beschleunigt werden. Das als Umsetzungsprodukt anfallende Urethanacrylat kann andererseits durch Zugabe geeigneter Inhibitoren und Antioxidantien wie beispielsweise Phenole und/oder Hydrochinone, in Mengen von jeweils 0,001 bis 0,3 Gew.-%, bezogen auf Urethanacrylat, vor vorzeitiger und unerwünschter Polymerisation geschützt werden. Der Zusatz dieser Hilfsmittel kann vor, gleichzeitig, und/oder im Anschluß an die Umsetzung erfolgen.

Die unter erfindungsgemäßer Verwendung der erfindungsgemäßen Produkte hergestellten Lacke können die an sich bekannten Hilfs- und Zusatzmittel der Lacktechnologie enthalten.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Die Acryloylgruppen enthaltenden Polyurethane können auch in an sich bekannten Lacklösungsmitteln gelöst, mit copolymerisierbaren Monomeren abgemischt oder in Wasser emulgiert zum Einsatz gelangen.

Geeignete Lösungsmittel sind beispielsweise Butylacetat, Cyclohexan, Aceton, Toluol oder Gemische derartiger Lösungsmittel.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzu gehören beispielsweise Styrol, 1,6-Hexandioldiacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der Acryloylgruppen aufweisenden Polyurethane eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Falls die Acryloylgruppen aufweisenden Polyurethane aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfolgen.

Hierfür geeignete Emulgatoren sind bekannt und z.B. in Ullmanns Encyclopädie der tech. Chemie, Bd. 10, 4. Auflage, Kap. Emulsionen, S. 449 ff. beschrieben.

Bevorzugte Emulgatoren sind copolymerisierbare Acryloylgruppen enthaltende Polyurethanemulgatoren, wie sie in der DE-OS 3 900 257 beschrieben sind.

Die wäßrigen Emulsionen enthalten im allgemeinen 10 bis 70 Gew.-%, vorzugsweise 30 bis 70 Gew.-% der erfindungswesentlichen Acryloylgruppen aufweisenden Polyurethane. Die Herstellung der Emulsionen kann durch Einrühren von Wasser in das Gemisch aus erfindungsgemäßen Polyurethanacrylat und Emulgator z.B. durch einfaches Rühren oder mittels Dissolver erfolgen.

Zur Ausbildung einer feinteiligen Emulsion, d.h. zur besseren Einbringung der Schwerkräfte ist portionsweise Wasserzusatz bei Temperaturen unter 30°C vorteilhaft. Bei optimaler Scherung werden Öl-in-Wasser-Emulsionen gebildet.

Bei allen Varianten des erfindungsgemäßen Verfahrens erfolgt die Aushärtung, gegebenenfalls nach Verdunsten von flüchtigen Hilfsmitteln wie inerte Lösungsmittel oder Wasser, mittels energiereicher Strahlung, wie UV-Licht, Elektronen- oder Gammastrahlen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Korsar, Light-Sensitive Systems, J. Wiley & Sons, New-York - London - Sydney 1965, beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-methylphenylpropan-1-on.

Die erwähnten Fotoinitiatoren, die je nach Verwendungszweck der erfindungsgemäßen Masse in Mengen zwischen 0,1 und 10 Gew.-%, vorzugsweise 0,1 bis 5 Gew.-%, bezogen auf das Gewicht der Reaktionsprodukte, eingesetzt werden, können als einzelne Substanz oder, wegen häufiger vorteilhafter synergistischer Effekte auch in Kombination miteinander verwendet werden.

Die unter Verwendung der erfindungsgemäßen Polyurethane als Bindemittel hergestellten Überzugsmassen bzw. Lacke eignen sich zur Beschichtung der unterschiedlichsten Substrate wie z.B. Papier, Kartonage, Leder, Holz, Kunststoffe, Vlies, Textilien, keramische Materialien, mineralische Materialien, Glas, Metall, Kunstleder, fotografische Materialien wie z.B. mit fotografischer Schicht versehenes Papier.

In den nachfolgenden Beispielen beziehen sich alle Prozentangeben auf Gewichtsprozente.

Beispiele

Die in Tabelle 1 genannte Menge an Komponente a) wird zusammen mit 0,2 % Zinndioctoat und 0,1 % 2,6-Di-t.-butyl-p.-kresol in Butylacetat gelöst (in einer Menge, daß nach Herstellung ein Festkörpergehalt von 80 %. vorliegt) und unter Durchleiten von Luft auf 50°C erwärmt. Dann wird die in Tabelle 1 genannte Menge an Komponente b), dann die genannte Menge an Komponente c), schließlich die genannte Menge an Komponente d) zugetropft. Die Reaktionstemperatur wird hierbei, erforderlichenfalls durch externes Kühlen bei max. 60°C gehalten. Anschließend wird die Mischung bei 60°C solange gehalten, bis der NCO-Gehalt auf kleiner 0,1 % gefallen ist.

Tabelle 1

| Einwaage (Mol) | Beispiele | | | Vergleichsbeispiele | |
|---|---|---|---|---|---|
| | 1 | 2 | 3 | 4 | 5 |
| **Komponente a)** | | | | | |
| Hexamethylendiisocyanat | 1,0 | 1,0 | 1,0 | | |
| Isophorondiisocyanat | | | | 1,0 | 1,0 |
| **Komponente b)** | | | | | |
| Hydroxyethylacrylat | 0,8 | 0,8 | 0,8 | 0,9 | 0,8 |
| **Komponente c)** | | | | | |
| 4-fach ethoxyliertes Trimethylolpropandiacetat | 0,2 | 0,2 | | | |
| 4-fach ethoxyliertes Trimethylolpropandiacrylat | | | 0,2 | 0,1 | 0,2 |
| **Komponente d)** | | | | | |
| Trimethylolpropan | 0,33 | 0,33 | 0,33 | 0,33 | 0,33 |
| 4fach ethoxyliertes Trimethylolpropan | | | | | |
| Viskosität (23°C, mPa's) | 6500 | 4500 | 9950 | krist. | 78400 |

Verwendungsbeispiele

Das Produkt aus Vergleichsbeispiel 4 konnte nicht eingesetzt werden, da es wegen Kristallinität nicht applizierbar war. Zur besseren Übersichtlichkeit entspricht die nachstehende Numerierung der Verwendungsbeispiele der vorstehenden Numerierung der Herstellungsbeispiele.

Die Produkte der erfindungsgemäßen Beispiele und des Vergleichsbeispiels 5 werden mit Butylacetat auf eine Verarbeitungsviskosität von ca. 50 Sekunden (DIN Becher 4 mm, 23°C) eingestellt und mit jeweils 5 % Benzophenon (berechnet auf 100 %iges Urethanacrylat) versetzt. Nach Auftragen der Lackfilme auf Karton (10 μm Auftragsstärke) werden diese unter einem Hanoviastrahler (80 W/cm, 10 cm Abstand) durchbewegt. Der in Tabelle 2 für die Reaktivität angegebene Wert gibt die Bandgeschwindigkeit an, bei der ein lösemittel- und kratzfester Überzug erzielt wurde.

"Lösemittelfest" bedeutet in diesem Fall, daß der Lackfilm nach mindestens 20 Doppelhüben mit einem in Butylacetat getränkten Tuch noch einwandfrei aussieht.

## Tabelle 2

|  | Beispiele | | | Vergleichsbeispiel |
| --- | --- | --- | --- | --- |
|  | 1 | 2 | 3 | 5 |
| Reaktivität (m/min) | 40 | 55 | 60 | < 10 |

## Patentansprüche

1. Acryloylgruppen enthaltende, aliphatische Polyurethane, die durch Umsetzung von
   a) 1,0 Mol einer Diisocyanat-Komponente, bestehend zumindest zu 50 NCO-Äquivalent-% aus Hexamethylendiisocyanat, mit
   b) 0,5 - 0,85 Mol einer Acryloylgruppen aufweisenden Alkoholkomponente, bestehend aus mindestens einem Acryloylgruppen aufweisenden einwertigen Alkohol des Molekulargewichtsbereichs 116 bis 144,
   c) 0,15 - 0,5 Mol mindestens einer Estergruppen aufweisenden Alkoholkomponente, bestehend aus mindestens einem Estergruppen aufweisenden einwertigen Alkohol des Molekulargewichtsbereichs 154 bis 2000 oder einem Gemisch Estergruppen aufweisender Alkohole eines mittleren Molekulargewichts von 154 bis 2000 und einer mittleren Hydroxylfunktionalität von 0,8 bis 1,5 und
   d) 0,3 - 0,5 Mol mindestens eines mehrwertigen Alkohols des Molekulargewichtsbereichs 62 bis 2000, unter Einhaltung eines NCO/OH-Äquivalentverhältnisses, bezogen auf alle Ausgangskomponenten a) bis d), von 0,5:1 bis 1:1 hergestellt worden sind.

2. Verfahren zur Herstellung von Acryloylgruppen enthaltenden Polyurethanen, dadurch gekennzeichnet, daß man
   a) 1,0 Mol einer Diisocyanat-Komponente, bestehend zumindest zu 50 NCO-Äquivalent-% aus Hexamethylendiisocyanat, mit
   b) 0,5 - 0,85 Mol einer Acryloylgruppen aufweisenden Alkoholkomponente, bestehend aus mindestens einem Acryloylgruppen aufweisenden einwertigen Alkohol des Molekulargewichtsbereichs 116 bis 144,
   c) 0,15 - 0,5 Mol mindestens einer Estergruppen aufweisenden Alkoholkomponente, bestehend aus mindestens einem Estergruppen aufweisenden einwertigen Alkohol des Molekulargewichtsbereichs 154 bis 2000 oder einem Gemisch Estergruppen aufweisender Alkohole eines mittleren Molekulargewichts von 154 bis 2000 und einer mittleren Hydroxylfunktionalität von 0,8 bis 1,5 und
   d) 0,3 - 0,5 Mol mindestens eines mehrwertigen Alkohols des Molekulargewichtsbereichs 62 bis 2000, unter Einhaltung eines NCO/OH-Äquivalentverhältnisses, bezogen auf alle Ausgangskomponenten a) bis d), von 0,5:1 bis 1:1 umsetzt.

3. Verwendung der Acryloylgruppen enthaltenden Polyurethane gemäß Anspruch 1 als Bindemittel für Überzugsmassen.

## Claims

1. Aliphatic polyurethanes containing acryloyl groups which have been obtained by reaction of
   a) 1 mole of a diisocyanate component of which at least 50 NCO equivalent-% consists of hexamethylene diisocyanate with
   b) 0.5 to 0.85 mole of an alcohol component containing acryloyl groups and consisting of at least one monohydric alcohol containing acryloyl groups with a molecular weight of 116 to 144,
   c) 0.15 to 0.5 mole of at least one alcohol component containing ester groups and consisting of at least one monohydric alcohol containing ester groups with a molecular weight of 154 to 2,000 or of a mixture of alcohols containing ester groups with an average molecular weight of 154 to 2,000 and an average hydroxyl functionality of 0.8 to 1.5 and
   d) 0.3 to 0.5 mole of at least one polyhydric alcohol with a molecular weight in the range from 62 to 2,000,
   an NCO:OH equivalent ratio, based on all the starting components a) to d), of 0.5:1 to 1:1 being maintained during the reaction.

2. A process for the production of polyurethanes containing acryloyl groups, characterized in that
   a) 1 mole of a diisocyanate component of which at least 50 NCO equivalent-% consists of hexamethylene diisocyanate is reacted with
   b) 0.5 to 0.85 mole of an alcohol component containing acryloyl groups and consisting of at least one monohydric alcohol containing acryloyl groups with a molecular weight of 116 to 144,
   c) 0.15 to 0.5 mole of at least one alcohol component containing ester groups and consisting of at least one monohydric alcohol containing ester groups with a molecular weight of 154 to 2,000 or of a mixture of alcohols containing ester groups with an average molecular weight of 154 to 2,000 and an average hydroxyl functionality of 0.8 to 1.5 and
   d) 0.3 to 0.5 mole of at least one polyhydric alcohol with a molecular weight in the range from 62 to 2,000,
   an NCO:OH equivalent ratio, based on all the starting components a) to d), of 0.5:1 to 1:1 being maintained during the reaction.

3. The use of the polyurethanes containing aryloyl groups claimed in claim 1 as a binder for coating compositions.

## Revendications

1. Polyuréthannes aliphatiques contenant des groupes acryloyle, qui ont été préparés par réaction
   a) de 1,0 mole d'un composant diisocyanate, constitué d'hexaméthylènediisocyanate en proportion d'au moins 50 % d'équivalents NCO, avec
   b) 0,5 à 0,85 mole d'un composant alcool porteur de groupes acryloyle, constitué d'au moins un alcool monovalent porteur de groupes acryloyle, de poids moléculaire compris dans la plage de 116 à 144,
   c) 0,15 à 0,5 mole d'au moins un composant alcool porteur de groupes ester, constitué d'au moins un alcool monovalent porteur de groupes ester de poids moléculaire compris dans la plage de 154 à 2000 ou d'un mélange d'alcools porteurs de groupes ester d'un poids moléculaire moyen de 154 à 2000 et de fonctionnalité hydroxyle moyenne comprise entre 0,8 et 1,5 et
   d) 0, 3 à 0,5 mole d'au moins un alcool polyvalent de poids moléculaire compris dans la plage de 62 à 2000,
   en observant un rapport d'équivalents NCO/OH, relativement à tous les composants a) à d) de départ, de 0,5:1 à 1:1.

2. Procédé de production de polyuréthannes porteurs de groupes acryloyle, caractérisé en ce qu'on fait réagir

a) 1,0 mole d'un composant diisocyanate, constitué d'hexaméthylènediisocyanate en proportion d'au moins 50 % d'équivalents NCO, avec

b) 0,5 à 0,85 mole d'un composant alcool porteur de groupes acryloyle, constitué d'au moins un alcool monovalent porteur de groupes acryloyle de poids moléculaire compris dans la plage de 116 à 144,

c) 0,15 à 0,5 mole d'au moins un composant alcool porteur de groupes ester, constitué d'au moins un alcool monovalent porteur de groupes ester de poids moléculaire compris dans la plage de 154 à 2000 ou d'un mélange d'alcools porteur de groupes ester d'un poids moléculaire moyen de 154 à 2000 et de fonctionnalité hydroxyle moyenne allant de 0,8 à 1,5 et

d) 0,3 à 0,5 mole d'au moins un alcool polyvalent de poids moléculaire compris dans la plage de 62 à 2000,

en observant un rapport d'équivalents NCO/OH, relativement à tous les composants a) à d) de départ, de 0,5:1 à 1:1.

3. Utilisation des polyuréthannes porteurs de groupes acryloyle suivant la revendication 1 comme liants pour compositions de revêtement.